# EUROPÄISCHE PATENTSCHRIFT

(11) **EP 2 212 162 B1**
(45) Veröffentlichungstag und Bekanntmachung des Hinweises auf die Patenterteilung: **13.02.2013**
(21) Anmeldenummer: 08849988.4
(22) Anmeldetag: 14.11.2008
(51) Int. Cl.: B60R 21/2165, B60R 21/216

(54) **FANGBAND FÜR AIRBAGABDECKUNG UND VERFAHREN ZUM HERSTELLEN EINES VERKLEIDUNGSTEILS**
REBOUND STRAP FOR AN AIRBAG COVER AND METHOD FOR PRODUCING A TRIM PART
SANGLE POUR CACHE D'AIRBAG, ET PROCÉDÉ DE FABRICATION D'UN ÉLÉMENT DE GARNITURE

(30) Priorität: 14.11.2007 DE 102007055016
(43) Veröffentlichungstag der Anmeldung: 04.08.2010
(73) Patentinhaber: Faurecia Innenraum Systeme GmbH, 76767 Hagenbach (DE)
(72) Erfinder: LABOECK, Christian, 83109 Grosskarolinefeld (DE); RECH, Matthias, 68723 Scwetzingen (DE)
(74) Vertreter: Pfenning, Meinig & Partner GbR
(86) Internationale Anmeldenummer: PCT/EP2008/009831
(87) Internationale Veröffentlichungsnummer: WO 2009/062755

(56) Entgegenhaltungen:
- DE-A1- 19 633 109
- DE-A1- 19 735 438
- JP-A- 7 285 406
- US-A1- 2005 127 641
- US-B1- 6 170 859
- ANONYMOUS: "Air bag door for vehicle instrument panel" RESEARCH DISCLOSURE, MASON PUBLICATIONS, HAMPSHIRE, GB, Bd. 372, Nr. 41, 1. April 1995 (1995-04-01), XP007120332 ISSN: 0374-4353

## Beschreibung

Die Erfindung betrifft ein Verkleidungsteil mit einer aufklappbaren Airbagabdeckung, die mittels eines flexiblen flächigen Rückhalteelements angelenkt ist, nach dem Oberbegriffs des Hauptanspruchs sowie ein Verfahren zum Herstellen eines derartigen Verkleidungsteils nach dem Oberbegriff des Nebenanspruchs.

Bei einem gattungsgemäßen Verkleidungsteil weist das mit einem ersten Ende an der Airbagabdeckung und mit einem zweiten Ende an einer Verankerung außerhalb der Airbagabdeckung befestigte Rückhalteelement zwischen der Airbagabdeckung und der genannten Verankerung eine Überlänge auf, wobei zumindest eines der beiden Enden mit einer quer zu einer Belastungsrichtung des Rückhalteelements orientierten Leiste verbunden ist, die an der Airbagabdeckung oder an der Verankerung befestigt ist. Ein solches Verkleidungsteil ist beispielsweise aus der Druckschrift DE 196 33 109 A1 bekannt.

Mit der genannten Leiste soll dabei eine stabile Verbindung der Airbagabdeckung mit der Verankerung ermöglicht werden, die hinreichend belastungsfähig ist, um einen Öffnungsstoß auszuhalten. Die Überlänge des Rückhalteelements ist typischerweise dadurch realisiert, dass das Rückhalteelement in Form einer Schlaufe von der Verankerung zur Airbagabdeckung geführt ist. Das soll der Airbagabdeckung im Fall einer Airbagauslösung erlauben, sich aus einer Durchtrittsöffnung des Verkleidungsteils herauszuheben, bevor sich das Rückhalteelement strafft und dann als Scharnier wirkt und eine Rotationsbewegung der aufklappenden Airbagabdeckung erzwingt, die dann erst ungehindert möglich ist. Bei der Herstellung derartiger Verkleidungsteile nach dem Stand der Technik tritt das Problem auf, dass sich das Rückhalteelement aufgrund der erforderlichen Überlänge beim Befestigen der mit dem Rückhalteelement verbundenen Leiste an der Airbagabdeckung oder an der Verankerung außerhalb der Airbagabdeckung zwischen der Leiste und der Airbagabdeckung bzw. der Verankerung einklemmen oder beschädigt werden kann, so dass unbeabsichtigt und womöglich unbemerkt nur eine reduzierte Überlänge zurückbleibt und später im Fall eines Airbagschusses eine Aufklappbewegung der Airbagabdeckung aufgrund der zu geringen Überlänge behindert wird.

Der Erfindung liegt also die Aufgabe zugrunde, ein entsprechendes Verkleidungsteil zu entwickeln, bei dem ein Einklemmen oder Beschädigen des Rückhalteelements während der Herstellung des Verkleidungsteils mit Sicherheit verhindert wird, ohne dass die Herstellung des Verkleidungsteils dadurch aufwendiger würde. Der Erfindung liegt ferner die Aufgabe zugrunde, ein in dieser Hinsicht verbessertes Verfahren zum Herstellen eines derartigen Verkleidungsteils vorzuschlagen.

Diese Aufgabe wird erfindungsgemäß gelöst durch ein Verkleidungsteil mit den kennzeichnenden Merkmalen des Hauptanspruchs in Verbindung mit den Merkmalen des Oberbegriffs des Hauptanspruchs sowie durch ein Verfahren mit den Merkmalen des Nebenanspruchs. Vorteilhafte Ausgestaltungen und weiterentwicklungen der Erfindung ergeben sich mit den Merkmalen der Unteransprüche.

Dadurch, dass an der Leiste, die an der Airbagabdeckung oder an der Verankerung befestigt ist, quer zu dieser Leiste orientierte Stege angeformt sind, die zumindest stellenweise mit dem Rückhalteelement verbunden sind und zumindest einen Teil der Überlänge des Rückhalteelements aufnehmen, wird ein Einklemmen des Rückhalteelements hinter der Leiste bei einem Befestigen der Leiste an der Airbagabdeckung oder an der Verankerung sicher verhindert. Auch eine Beschädigung des Rückhalteelements kann so vermieden werden, weil das Rückhalteelement beim Verbinden des mit der mindestens einen Leiste verbundenen Rückhaltelements mit der Airbagabdeckung und der Verankerung durch die Stege in eine definierte Lage gezwungen wird, in der das Rückhalteelement nicht oder nur geringfügig lose ist. Dabei werden die Stege zweckmäßigerweise so schwach ausgeführt, dass sie ein Strecken des Rückhalteelements bei einer Öffnungsbewegung der Airbagabdeckung nicht behindern.

Ein entsprechend vorteilhaftes Verfahren zum Herstellen eines Verkleidungsteils hier vorgeschlagener Art sieht dementsprechend vor, dass ein flexibles flächiges Rückhalteelement für die Airbagabdeckung, welches an zumindest einem von zwei Enden mit einer Leiste verbunden ist, mit einem Rohling des Verkleidungsteils mit einer aufklappbaren Airbagabdeckung verbunden wird durch Befestigen eines ersten der zwei Enden an der Airbagabdeckung und eines zweiten der zwei Enden an einer Verankerung außerhalb der Airbagabdeckung, indem die mindestens eine Leiste an der Airbagabdeckung oder an der Verankerung befestigt wird, wobei zwischen der Airbagabdeckung und der genannten Verankerung eine Überlänge des Rückhalteelements verbleibt und ein Einklemmen des Rückhalteelements verhindert wird durch an die Leiste angeformte und quer zu dieser Leiste orientierte Stege, die zumindest stellenweise mit dem Rückhalteelement verbunden sind und zumindest einen Teil der Überlänge des Rückhalteelements aufnehmen.

Die Leiste kann dabei in vorteilhaft einfacher Weise durch Spritzgießen hergestellt werden, wobei eine Verbindung der Leiste mit dem Rückhalteelement dann dadurch realisiert werden kann, dass das Rückhalteelement bei der Herstellung der Leiste umspritzt und so in die Leiste eingebettet wird. Dabei wird die Leiste vorzugsweise aus einem thermoplastischen Kunststoff hergestellt. Die Stege können dann in ebenfalls einfacher Weise einstückig mit der Leiste ausgeführt und an das Rückhalteelement angespritzt werden, beispielsweise derart, dass ein die Stege bildendes Material zumindest einige Fasern eines das Rückhalteelement bildenden und typischerweise textilen Materials umschließt.

Die Stege sind bei bevorzugten Ausführungen der Erfindung so angeordnet, dass sie an einem Rand der

Leiste ansetzen, an der das Rückhalteelement die Leiste verlässt. Um zumindest einen Teil der Überlänge des Rückhalteelements so aufzunehmen, dass dieses durch die Stege in einer definierten Form gehalten wird, können die Stege einem gegenüber einer direkten Verbindungslinie zwischen den beiden Enden des Rückhalteelements von der Airbagabdeckung weg gekrümmten Verlauf folgen.

Die Überlänge des Rückhalteelements ist vorzugsweise so dimensioniert, dass das Rückhalteelement bei einer Öffnung der Airbagabdeckung sich erst dann strafft, wenn die Airbagabdeckung einen etwa oder mindestens einer Dicke des Verkleidungsteils entsprechenden Weg zurückgelegt hat, damit eine Aufklappbewegung dann ungehindert möglich ist. Die Stege wiederum sollten eine Länge ungefähr der gleichen Größenordnung haben, um die Überlänge so weit aufnehmen zu können, dass ein Einklemmen oder ein Beschädigen des Rückhalteelements bei einer Montage verhindert wird. Vorzugsweise beträgt die Länge der Stege dazu zwischen 5 mm und 30 mm. Dabei sollten die Stege nicht zu dick sein, um ein Strecken des Rückhalteelements nicht zu sehr zu behindern. Zu bevorzugen wäre daher ein Durchmesser der Stege von nicht mehr als 5 mm, vorzugsweise nicht mehr als 3 mm.

Damit die Überlänge des Rückhalteelements bei einer nicht zu aufwendigen Gestaltung der entsprechenden Leiste auf ganzer Breite des Rückhalteelements aufgenommen werden kann, können vorteilhafterweise zwischen zwei und zwölf Stege, vorzugsweise mindestens drei oder vier zumindest stellenweise mit dem Rückhalteelement verbundene Stege, vorgesehen sein.

Bei einer Herstellung des Verkleidungsteils kann die mindestens eine mit dem Rückhalteelement verbundene Leiste in besonders einfacher Weise durch Anschweißen, Anschrauben oder Annieten mit der Airbagabdeckung oder der Verankerung so verbunden werden, dass eine hinreichend belastbare Verbindung, die auch einem Airbagschuss standhält, zustande kommt.

Typischerweise wird das Rückhalteelement an beiden Enden jeweils mit einer quer zur Belastungsrichtung, also parallel zu einem entsprechenden Rand der Airbagabdeckung, orientierten Leiste verbunden sein, wobei die eine dieser Leisten an der Airbagabdeckung und die andere an der Verankerung außerhalb der Airbagabdeckung befestigt ist. Bei der Verankerung kann es sich dabei z. B. um einen Teil eines Trägers des Verkleidungsteils, eine Wand oder ein anderes Teil eines Schusskanals für den Airbag oder ein anderes tragendes Teil hinter dem Verkleidungsteil handeln. Wenn eine Befestigung des Rückhalteelements mit zwei Leisten vorgesehen wird, kann die Montage des Rückhalteelements in besonders vorteilhafter Weise nach der eigentlichen Herstellung des Verkleidungsteils bzw. eines Rohlings des Verkleidungsteils erfolgen. Damit wird die Herstellung des Rohlings vereinfacht, weil sich z. B. ein aufwendiges Einbringen des Rückhalteelements in ein Formwerkzeug für das Verkleidungsteil oder einen Träger des Verkleidungsteils erübrigt. Ob die Stege in diesem Fall an der Leiste angeformt sind, die an der Airbagabdeckung befestigt ist, oder an der anderen, an der Verankerung außerhalb der Airbagabdeckung befestigten Leiste, ist unerheblich. Wenn die Airbagklappe als bewegliches Teil möglichst unaufwendig gestaltet werden soll, kann sich ein Anformen der Stege an der außerhalb der Airbagabdeckung befestigten Leiste anbieten. Ferner können die beiden Leisten auf unterschiedliche Weise befestigt sein, beispielsweise eine Leiste durch Anschweißen und die andere durch Anschrauben oder Nieten, wobei eine bevorzugte Wahl abhängig von dem Material der Airbagabdeckung oder der Verankerung und von geometrischen Bedingungen getroffen werden kann.

Ein Ausführungsbeispiel der Erfindung wird nachfolgend anhand der Figuren 1 bis 3 erläutert. Es zeigt
- Fig. 1: einen Querschnitt durch ein Verkleidungsteil in einer Ausführung der Erfindung,
- Fig. 2: einen vergrößerten Ausschnitt des Querschnitts aus Fig. 1 und
- Fig. 3: eine perspektivische Ansicht von Bestandteilen des Verkleidungsteils aus den Fign. 1 und 2.

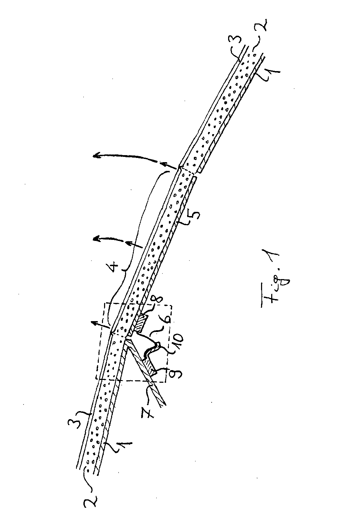

In Fig. 1 ist ein Verkleidungsteil zu erkennen, bei dem es sich um einen Teil einer Instrumententafel handelt, hinter dem ein in Fig. 1 nicht abgebildeter Beifahrerairbag angeordnet ist. Das Verkleidungsteil weist einen Träger 1 aus einem thermoplastischen Kunststoff, eine geschäumte Zwischenschicht 2 und ein Oberflächendekor 3 auf. Dabei umfasst es eine aufklappbare Airbagabdeckung 4, die über oder vor dem genannten Beifahrerairbag angeordnet ist.

Die Airbagabdeckung 4 weist ein eigenes Trägerteil 5 auf, das eine Durchtrittsöffnung im Träger 1 ausfüllt. Außerdem sind die Zwischenschicht 2 und das Oberflächendekor 3 längs einer Umrandung der Airbagabdeckung 4 so geschwächt, dass sich die Airbagabdeckung 4 im Fall einer Airbagauslösung durch den dann auf das Trägerteil 5 wirkenden Öffnungsstoß lösen und so die Durchtrittsöffnung freigeben kann.

Damit die Airbagabdeckung 4 nicht ungehindert in einen Fahrzeuginnenraum fliegen kann, ist sie mittels eines flexiblen flächigen Rückhalteelements 6 angebunden, bei dem es sich um eine aus einem textilen Material gefertigte netzförmige Matte handelt, die annähernd so breit ist wie das Trägerteil 5. Dazu ist das Rückhalteelement 6 mit einem ersten Ende an der Airbagabdeckung 4 und dort am Trägerteil 5 befestigt und mit einem zweiten Ende an einem als Verankerung dienenden Teil eines Schusskanals 7. Anstelle einer Matte könnten selbstverständlich auch mehrere parallel angeordnete Bänder als Rückhalteelement 6 dienen. Zwischen der Airbagabdeckung 4 und der Verankerung am Schusskanal 7 hat das Rückhalteelement 6 eine Überlänge, die es der Airbagabdeckung 4 im Fall einer Airbagauslösung erlaubt, sich zunächst so weit aus der Durchtrittsöffnung herauszubewegen, dass eine ungehinderte Klappbewegung möglich wird, bevor sich das Rückhalteelement 6 strafft und die Airbagklappe 4 in diese Klappbewegung zwingt. Das Rückhalteelement 6 wirkt dann als Airbagklappenscharnier. In Fig. 1 oberhalb der Airbagabdeckung 4 eingezeichnete Pfeile veranschaulichen eine Bewegung, die dadurch von der Airbagabdeckung 4 im Fall einer Airbagauslösung ausgeführt wird.

Zur Befestigung des Rückhalteelements 6 sind die beiden Enden des Rückhalteelements 6 mit zwei quer zu einer Belastungsrichtung des Rückhalteelements 6, also senkrecht zu einer Zeichenebene der Fig. 1, orientierten Leisten 8 und 9 verbunden, wobei die mit dem ersten Ende verbundene Leiste 8 am Trägerteil 5 der Airbagabdeckung 4 und die mit dem zweiten Ende verbundene Leiste 9 an der durch den Schusskanal 7 gegebenen Verankerung befestigt ist.

An der Leiste 9 sind quer zu dieser Leiste 9 orientierte Stege 10 angeformt, die mit dem Rückhalteelement 6 verbunden sind und die Überlänge des Rückhalteelements 6 so aufnehmen, dass das Rückhalteelement 6 nahezu keine Lose mehr bildet und durch die Stege 10 in einer definierten Form und Position gehalten wird.

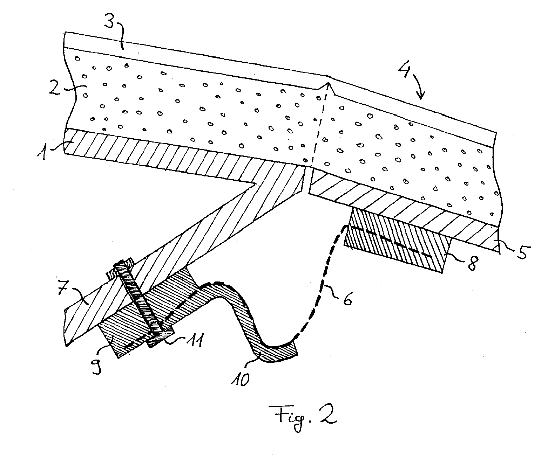

Ein in Fig. 1 mit einer gestrichelten Linie umrandeter Teilbereich ist in Fig. 2 noch einmal detaillierter dargestellt. Dabei sind dieselben Merkmale wieder mit den gleichen Bezugszeichen versehen. Die Leisten 8 und 9 sind aus thermoplastischem Kunststoff gefertigte Spritzgussteile, in die das jeweilige Ende des Rückhalteelements 6 eingebettet ist. Dazu wurde das Rückhalteelement 6 in eine entsprechende Gießform eingebracht, so dass die beiden Enden des Rückhalteelements 6 bei einer Herstellung der Leisten 8 und 9 umspritzt wurden. Die Stege 10, von denen beim vorliegenden Ausführungsbeispiel acht über eine Breite der Airbagabdeckung 4 bzw. längs der Leiste 9 verteilt angeordnet sind, sind einstückig mit der Leiste 9 ausgeführt und bei der Herstellung der Leiste 9 im selben Formwerkzeug so an das Rückhalteelement 6 angespritzt worden, dass zumindest einige Fasern des Rückhalteelements 6 von einem die Stege 10 bildenden Material umschlossen sind. Dazu setzen die Stege 10 an einem der Leiste 8 zugewandten Rand der Leiste 9 an, an der das Rückhalteelement 6 die Leiste 9 verlässt. Um die Überlänge des Rückhalteelements 6 auf zunehmen, folgen die Stege 10, von denen in den Fign. 1 und 2 jeweils nur ein erster zu erkennen ist, einem gegenüber einer direkten Verbindungslinie zwischen den beiden Leisten 8 und 9 von der Airbagabdeckung 4 weg gekrümmten Verlauf. Dabei haben die Stege 10 einen Durchmesser von etwa 2,5 mm und eine Länge von etwa 15 mm.

Die Leiste 9 ist durch in Fig. 2 angedeutete Schrauben 11 mit dem als Verankerung dienenden Teil des Schusskanals 7 verbunden. Statt der Schrauben 11 könnten auch beispielsweise Nieten zur Befestigung der Leiste 9 verwendet werden. Die andere Leiste 8 ist an dem ebenfalls aus einem thermoplastischen Kunststoff gefertigten Trägerteil 5 angeschweißt. Sie kann insbesondere beispielsweise durch Ultraschallschweißen oder Energierichtungsgeber-Schweißen angeschweißt worden sein kann. Das erlaubt eine nachträgliche Befestigung des Rückhalteelements 6 nach einer Herstellung eines durch die übrigen Bestandteile des Verkleidungsteils gegebenen Rohlings des Verkleidungsteils. Das erleichtert die Herstellung dieses Rohlings, für die beispielsweise das Oberflächendekor 3 hinterschäumt und so mit dem Träger 1 und dem Trägerteil 5 verbunden werden kann. Wenn dann erst das mit seinen Enden in die Leisten 8 und 9 eingebettete und mit den Stegen 10 verbundene Rückhalteelement 6 mit dem so hergestellten Rohling des Verkleidungsteils verbunden wird, indem die Leiste 8 an das Trägerteil 5 angeschweißt und die Leiste 9 mit dem Schusskanal 7 verschraubt oder dort angenietet wird, wird ein Einklemmen des mit der Überlänge versehenen Rückhalteelements 6 zwischen der Leiste 9 und dem Schusskanal 7 oder zwischen der Leiste 8 und dem Trägerteil 5 dadurch verhindert, dass die Überlänge zumindest größtenteils von den Stegen 10 aufgenommen wird, die das Rückhalteelement 6 dadurch in einer definierten Position halten. Dabei sind die Stege 10 so schwach ausgeführt, dass sie ein Strecken des Rückhalteelements 6 im Fall einer Airbagauslösung nicht behindern. Zum Befestigen der Leisten 8 und 9 wird das durch ein netzförmiges Gewebe gebildete Rückhalteelement 6 mit den Leisten 8 und 9 in ein Schweißwerkzeug eingelegt, wobei das Rückhalteelement 6 durch die Stege 10 in die Form einer Schlaufe gezwungen wird und so nicht nur an einem Einklemmen gehindert, sondern auch vor Beschädigungen bewahrt wird, ohne dass das Rückhalteelement 6 vor dem Verschweißen und Verschrauben in aufwendiger weise manuell oder robotergesteuert in seine Position gebracht werden müsste. Vielmehr genügt es, die Leisten 8 und 9 vor dem Befestigen am Trägerteil 5 und am Schusskanal 7 in die gewünschten Positionen zu bringen.

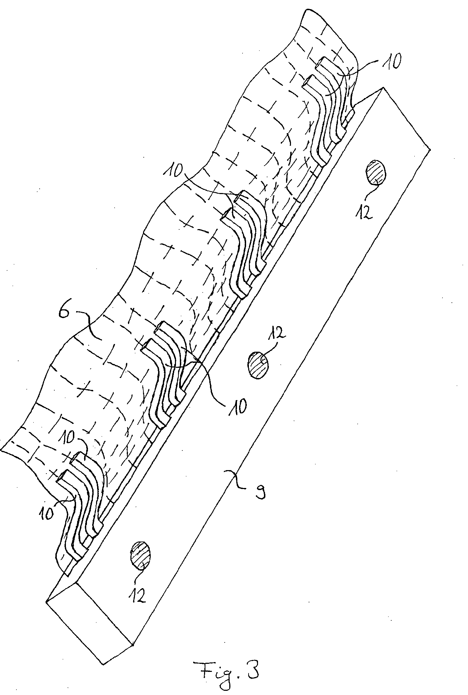

In Fig. 3 ist die Leiste 9 mit den Stegen 10 und einem Teil des Rückhalteelements 6 noch einmal in perspektivischer Ansicht gezeigt. Hier sind alle acht Stege 10 erkennbar. Ebenfalls in Fig. 3 zu erkennen sind drei Bohrungen 12 zur Aufnahme der zum Befestigen der Leiste 9 dienenden Schrauben 11. Selbstverständlich könnten die Stege 10 anstelle der Leiste 9 auch an der anderen Leiste 8 angeformt sein, die an der Airbagabdeckung 4 befestigt ist. Die Leiste 9 wiederum, die hier an dem einstückig mit dem Träger 1 ausgeführten Schusskanal 7 befestigt ist, könnte alternativ auch an anderen tragenden Teilen außerhalb des Verkleidungsteils befestigt sein.

Abschließend sei klargestellt, dass der in der vorliegenden Schrift verwendete Begriff "Leiste" weit zu verstehen sei. Er wird hier verwendet, weil die damit bezeichneten Elemente, die bei den Ausführungsbeispielen in den Figuren mit den Bezugszeichen 8 und 9 gekennzeichnet sind, bei typischen Ausführungen der Erfindung tatsächlich leistenförmig sind.

## Patentansprüche

1. Verkleidungsteil mit einer aufklappbaren Airbagabdeckung (4), wobei die Airbagabdeckung mittels eines flexiblen flächigen Rückhalteelements (6) angelenkt ist, das mit einem ersten Ende an der Airbagabdeckung (4) und mit einem zweiten Ende an einer Verankerung außerhalb der Airbagabdeckung (4) befestigt ist und zwischen der Airbagabdeckung (4) und der genannten Verankerung eine Überlänge aufweist, wobei zumindest eines der beiden Enden mit einer quer zu einer Belastungsrichtung des Rückhalteelements (6) orientierten Leiste (8, 9) verbunden ist, die an der Airbagabdeckung (4) oder an der Verankerung befestigt ist,
**dadurch gekennzeichnet,**
**dass** an der an der Airbagabdeckung (4) oder an der Verankerung befestigten Leiste (8,9) quer zu dieser Leiste (8,9) orientierte Stege (10) angeformt sind, wobei diese Stege (10) zumindest stellenweise mit dem Rückhalteelement (6) verbunden sind und zumindest einen Teil der Überlänge des Rückhalteelements (6) aufnehmen.

2. Verkleidungsteil nach Anspruch 1, **dadurch gekennzeichnet, dass** die Leiste (9) ein einstückig mit den Stegen (10) ausgeführtes Spritzgussteil ist, in das das Rückhalteelement (6) eingebettet ist, wobei ferner die Stege (10) an das Rückhalteelement (6) angespritzt sind oder Teile des Rückhalteelements mit den Stegen (10) umspritzt sind.

3. Verkleidungsteil nach einem der Ansprüche 1 oder 2, **dadurch gekennzeichnet, dass** die Stege (10) an einem Rand der Leiste (9) ansetzen, an der das Rückhalteelement (6) die Leiste (9) verlässt.

4. Verkleidungsteil nach einem der Ansprüche 1 bis 3, **dadurch gekennzeichnet, dass** die Stege (10) einem gegenüber einer direkten Verbindungslinie zwischen den beiden Enden des Rückhalteelements (6) von der Airbagabdeckung (4) weg gekrümmten Verlauf folgen.

5. Verkleidungsteil nach einem der Ansprüche 1 bis 4, **dadurch gekennzeichnet, dass** die Stege (10) eine Länge von zwischen 5 mm und 30 mm haben.

6. Verkleidungsteil nach einem der Ansprüche 1 bis 5, **dadurch gekennzeichnet, dass** zwischen zwei und zwölf Stege (10) zum Aufnehmen der Überlänge des Rückhalteelements (6) vorgesehen sind.

7. Verkleidungsteil nach einem der Ansprüche 1 bis 6, **dadurch gekennzeichnet, dass** das Rückhalteelement (6) ein Band oder eine Matte aus einem textilen Material ist.

8. Verkleidungsteil nach einem der Ansprüche 1 bis 7, **dadurch gekennzeichnet, dass** die Leiste (8, 9) an der Airbagabdeckung (4) oder an der Verankerung angeschweißt, angeschraubt oder angenietet ist.

9. Verfahren zum Herstellen eines Verkleidungsteils mit einer aufklappbaren Airbagabdeckung (4), umfassend die Schritte
- Vorsehen eines Rohlings des Verkleidungsteils mit der eine Durchtrittsöffnung für einen Airbag abdeckenden Aibagabdeckung (4),
- Vorsehen eines flexiblen flächigen Rückhalteelements für die Airbagabdeckung (4), das an zumindest einem von zwei Enden mit einer Leiste (8, 9) verbunden ist,
- Verbinden des Rückhalteelements (6) mit dem Rohling des Verkleidungsteils durch Befestigen eines ersten der zwei Enden an der Airbagabdeckung (4) und eines zweiten der zwei Enden an einer Verankerung außerhalb der Airbagabdeckung (4), indem die mindestens eine Leiste (8, 9) an der Airbagabdeckung (4) oder an der Verankerung befestigt wird, wobei zwischen der Airbagabdeckung (4) und der genannten Verankerung eine Überlänge des Rückhalteelements (6) verbleibt,
**dadurch gekennzeichnet,**
**dass** beim Befestigen der Leiste (8, 9) an der Airbagabdeckung (6) oder an der Verankerung ein Einklemmen des mit der Überlänge versehenen Rückhalteelements (6) verhindert wird durch an die Leiste (9) angeformte und quer zu dieser Leiste (9) orientierte Stege (10), die zumindest stellenweise mit dem Rückhalteelement (6) verbunden sind und zumindest einen Teil der Überlänge des Rückhalteelements (6) aufnehmen.

10. Verfahren nach Anspruch 9, **dadurch gekennzeichnet, dass** die mindestens eine Leiste (8, 9) durch Spritzgießen hergestellt wird, wobei das Rückhalteelement (6) umspritzt und so in die Leiste (8, 9) eingebettet wird.

11. Verfahren nach Anspruch 10, **dadurch gekennzeichnet, dass** die Stege (10) einstückig mit der Leiste (9) ausgeführt und an das Rückhalteelement (6) angespritzt werden.

12. Verfahren nach einem der Ansprüche 9 bis 11, **dadurch gekennzeichnet, dass** die Leiste (8, 9) an der Airbagabdeckung (4) oder an der Verankerung angeschweißt, angeschraubt oder angenietet wird.

## Claims

1. Trim part having a hinged airbag cover (4), the airbag cover being linked by means of a flexible flat retaining element (6) which is secured by a first end on the airbag cover (4) and by a second end on an anchor outwith the airbag cover (4) and has an excess length between the airbag cover (4) and the mentioned anchor, at least one of the two ends being connected to a strip (8, 9) which is orientated transversely relative to a loading direction of the retaining element (6) and being secured on the airbag cover (4) or on the anchor, **characterised in that**
there are moulded on the strip (8, 9), which is secured on the airbag cover (4) or on the anchor, webs (10) which are orientated transversely relative to the strip (8, 9), these webs (10) being connected to the retaining element (6) at least at places and taking up at least a part of the excess length of the retaining element (6).

2. Trim part according to claim 1, **characterised in that** the strip (9) is an injection moulded part which is configured in one piece with the webs (10) and in which the retaining element (6) is embedded, furthermore the webs (10) being injection-moulded on the retaining element (6) or parts of the retaining element being injection-moulded around with the webs (10).

3. Trim part according to one of the claims 1 or 2, **characterised in that** the webs (10) begin at one edge of the strip (9) at which the retaining element (6) leaves the strip (9).

4. Trim part according to one of the claims 1 to 3, **characterised in that** the webs (10) follow a curved course, as opposed to a direct connection line, between the two ends of the retaining element (6) away from the airbag cover (4).

5. Trim part according to one of the claims 1 to 4, **characterised in that** the webs (10) have a length of between 5 mm and 30 mm.

6. Trim part according to one of the claims 1 to 5, **characterised in that** between two and twelve webs (10) are provided for taking up the excess length of the retaining element (6).

7. Trim part according to one of the claims 1 to 6, **characterised in that** the retaining element (6) is a band or a mat made of a textile material.

8. Trim part according to one of the claims 1 to 7, **characterised in that** the strip (8, 9) is welded, screwed or riveted on the airbag cover (4) or on the anchor.

9. Method for producing a trim part having a hinged airbag cover (4), comprising the steps
- providing a blank of the trim part with the airbag cover (4) which covers a passage opening for an airbag,
- providing a flexible flat retaining element for the airbag cover (4) which is connected at at least one of two ends to a strip (8, 9),
- connecting the retaining element (6) to the blank of the trim part by securing a first of the two ends on the airbag cover (4) and a second of the two ends on an anchor outwith the airbag cover (4) in that the at least one strip (8, 9) is secured on the airbag cover (4) or on the anchor, an excess length of the retaining element (6) remaining between the airbag cover (4) and the mentioned anchor, **characterised in that**,
when securing the strip (8, 9) on the airbag cover (6) or on the anchor, jamming of the retaining element (6) provided with the excess length is prevented by webs (10) which are moulded on the strip (9) and orientated transversely relative to this strip (9), which webs are connected to the retaining element (6) at least at places and take up at least a part of the excess length of the retaining element (6).

10. Method according to claim 9, **characterised in that** the at least one strip (8, 9) is produced by injection moulding, the retaining element (6) being injected around and thus being embedded in the strip (8, 9).

11. Method according to claim 10, **characterised in that** the webs (10) are configured in one piece with the strip (9) and are injection-moulded onto the retaining element (6).

12. Method according to one of the claims 9 to 11, **characterised in that** the strip (8, 9) is welded, screwed or riveted on the airbag cover (4) or on the anchor.

## Revendications

1. Élément d'habillage avec un couvercle d'airbag rabattable (4), dans lequel le couvercle d'airbag est articulé au moyen d'un élément de retenue (6) plan et souple, fixé par une première extrémité au couvercle d'airbag (4) et par une deuxième extrémité à un ancrage externe au couvercle d'airbag (4), et comporte une surlongueur entre le couvercle d'airbag (4) et ledit ancrage, dans lequel au moins l'une des deux extrémités est reliée à une baguette (8, 9) orientée perpendiculairement au sens de charge de l'élément de retenue (6) et fixée au couvercle d'airbag (4) ou à l'ancrage,
**caractérisé en ce que**
sur la baguette (8, 9) fixée au couvercle d'airbag (4) ou à l'ancrage, sont formées des barres (10) orientées perpendiculairement à cette baguette (8, 9), ces barres (10) étant au moins par endroits reliées à l'élément de retenue (6) et accueillent au moins une partie de la surlongueur de l'élément de retenue (6).

2. Élément d'habillage selon la revendication 1, **caractérisé en ce que** la baguette (9) est une pièce moulée par injection, conçue intégralement avec les barres (10), dans laquelle est enrobé l'élément de retenue (6), les barres (10) étant en outre moulées par injection sur l'élément de retenue (6), ou des parties de l'élément de retenue étant enrobés par injection avec les barres (10).

3. Élément d'habillage selon l'une des revendications 1 ou 2, **caractérisé en ce que** les barres (10) s'appliquent sur un bord de la baguette (9), à l'endroit où l'élément de retenue (6) quitte la baguette (9).

4. Élément d'habillage selon l'une des revendications 1 à 3, **caractérisé en ce que** les barres (10) suivent un parcours courbe par rapport à une ligne de liaison directe entre les deux extrémités de l'élément de retenue (6), en partant du couvercle d'airbag (4).

5. Élément d'habillage selon l'une des revendications 1 à 4, **caractérisé en ce que** les barres (10) ont une longueur comprise entre 5 mm et 30 mm.

6. Élément d'habillage selon l'une des revendications 1 à 5, **caractérisé en ce qu'**il est prévu entre deux et douze barres (10) pour accueillir la surlongueur de l'élément de retenue (6).

7. Élément d'habillage selon l'une des revendications 1 à 6, **caractérisé en ce que** l'élément de retenue (6) est une bande ou un tapis de matière textile.

8. Élément d'habillage selon l'une des revendications 1 à 7, **caractérisé en ce que** la baguette (8, 9) est soudée, vissée ou rivetée sur le couvercle d'airbag (4) ou sur l'ancrage.

9. Procédé pour la fabrication d'un élément d'habillage avec un couvercle d'airbag (4) rabattable (4), comprenant les étapes suivantes :
- mise à disposition d'une pièce brute de l'élément d'habillage, avec une ouverture de passage pour un couvercle d'airbag (4) recouvrant un airbag,
- mise à disposition d'un élément de retenue plan et souple pour le couvercle d'airbag (4), relié à une baguette (8, 9) par moins l'une de ses deux extrémités,
- assemblage de l'élément de retenue (6) avec la pièce brute de l'élément d'habillage, par fixation de la première des deux extrémités au couvercle d'airbag (4) et la deuxième des deux extrémités à un ancrage externe au couvercle d'airbag (4), en fixant au moins une baguette (8, 9) au couvercle d'airbag (4) ou à l'ancrage, une surlongueur de l'élément de retenue (6) demeurant entre le couvercle d'airbag (4) et ledit ancrage,
**caractérisé en ce que**
- lors de la fixation de la baguette (8, 9) sur le couvercle d'airbag (4) ou sur l'ancrage, un serrage de l'élément de retenue (6) pourvu de la surlongueur est empêché, par des barres (10) formées sur la baguette (9) et orientées perpendiculairement à cette baguette (9), qui sont au moins par endroits reliées à l'élément de retenue (6) et accueillent au moins une partie de la surlongueur de l'élément de retenue (6).

10. Procédé selon la revendication 9, **caractérisé en ce que** l'au moins une baguette (8, 9) est fabriquée par moulage par injection, l'élément de retenue (6) étant moulé par injection et ainsi enrobé dans la baguette (8, 9).

11. Procédé selon la revendication 9, caractérisé en que les barres (10) sont conçues intégralement avec la baguette (9) et moulées par injection sur l'élément de retenue (6).

12. Procédé selon l'une des revendications 9 à 11, **caractérisé en ce que** la baguette (8, 9) est soudée, vissée ou rivetée sur le couvercle d'airbag (4) ou sur l'ancrage.
